# EUROPEAN PATENT APPLICATION

(11) **EP 4 083 575 A2**
(43) Date of publication of application: **02.11.2022**
(21) Application number: 22169870.7
(22) Date of filing: 26.04.2022
(51) Int. Cl.: G01C 21/00, G01C 21/26, G01C 21/30, G08G 1/00

(54) **SYSTEMS AND METHODS FOR ROUTE RECONSTRUCTION**

(30) Priority: 27.04.2021 US 202163180368 P
(71) Applicant: Via Transportation, Inc., New York, NY 10013 (US)
(72) Inventor: MARCOVITCH, Shmulik, Kfar Saba (IL); RAKAH, Yaron, Givatayim (IL); BERKMAN, Elad, Givatayim (IL); REISMAN, Aran, Givatayim (IL); SHOVAL, Oren, Jerusalem (IL); RAMOT, Daniel, New York, NY 10024 (US)
(74) Representative: Pearl Cohen Zedek Latzer Baratz UK LLP

(57) **Abstract**

A systems and methods for ridesharing are provided. The systems and method can include splitting a plurality of GPS locations for a given vehicle into segments, determining a most probable location for each GPS location, and reconstructing the route, for a fleet of ridesharing vehicles.

## Description

### CROSS REFERENCE TO RELATED APPLICATIONS

This application claims the benefit of and priority to U.S. Provisional Patent Application No. 63/180,368, filed April 27, 2021, the entire contents of which are owned by the assignee of the instant application and incorporated herein by reference in their entirety.

### FIELD OF THE INVENTION

The invention relates generally to vehicle ridesharing and systems and methods for ridesharing management.

### BACKGROUND OF THE INVENTION

Recent years have witnessed increasing interest and development in the field of vehicle sharing, where one or more riders may share the same vehicle for a portion of their rides. Ridesharing may save ride costs, increase vehicle utilization, and reduce air pollution. A rider may use a ridesharing service through a ridesharing service application accessed by the rider's mobile device.

Ridesharing service can be performed with a car, van, and/or bus. Ridesharing service can include scheduling pickup-drop offs of riders, determining routes for vehicles, modifying routes for vehicles on the fly. Ridesharing services can operate as fixed route, semi-fixed route, and/or full point-to-point services, and vehicles can be commanded to operate in any of those modes and/or be switched between those service types.

In some scenarios, it can be desirable to track a route that a vehicle (e.g., a van, car, bus) takes during operation. Ridesharing management system can direct a fleet of vehicles to take certain routes, but then during operation the vehicle can take a different route. For example, the driver may take a turn that is off the designated route. It can be desirable to compare planned routes and pickup/drop off times to the routes and pickup/drop off times that were actually executed.

### SUMMARY

Advantages of the invention can include an ability determining an actual route that each vehicle took, an ability to process the determination with a high processing speed and/or a high level of accuracy. Another advantage of the invention can include scalability due to, for example, the computation per vehicle being independent and/or each vehicle's route can be split into segments.

In one aspect, the invention includes a system for managing a fleet of ridesharing vehicles. The system includes a communications interface configured to receive Global Positioning System (GPS) data from the fleet of ridesharing vehicles. The system also includes at least one processor configured to for each ridesharing vehicle in the fleet: i) determine a plurality of GPS locations, wherein each GPS location includes an associated a time stamp; ii) split the plurality of GPS locations into substantially unique segments, wherein each segment includes a number of GPS locations that is based on one or more predetermined factors; iii) for each segment, determine a most probable location for each of the plurality of GPS locations to determine a partial route for each segment that the current rideshare vehicle rode on, and iv) determine a complete route for the current rideshare by concatenating the partial routes for each segment based on the time stamp.

In some embodiments, each segment includes one or two GPS locations that overlaps with one or two segments that have a sequential time stamp that is after, before or both. In some embodiments, the processor is also configured to filter the plurality of GPS locations if the distance between any of the plurality of GPS locations is below a predefined threshold.

In some embodiments, the processor is also configured to filter the plurality of GPS locations if its corresponding speed is below a predefined threshold. In some embodiments, the one or more predetermined factors are time duration, distance, desired computational time, or any combination thereof.

In some embodiments, the splitting further comprises avoiding splitting at GPS locations where the corresponding speed is below a predefined threshold. In some embodiments, the processor is also configured to determine a most probable location for each of the plurality of GPS locations for each segment is performed for all segments in parallel.

In some embodiments, determining a most probable location for each of the plurality of GPS locations for each segment further comprises determining a confidence for each GPS location with its corresponding determined most probable location, and retaining the most probable location if the confidence is above a threshold, otherwise discarding the GPS location in the respective segment.

In some embodiments, determining the complete route further comprises determining if the end and start points of each sequential partial route match, and if not, returning to step ii) and splitting the segments at different locations then previously split.

In some embodiments, determining a partial route for each segment that the current rideshare vehicle rode on further comprises applying a Markovian algorithm, dynamic programming, Viterbi algorithm, Kalman filter, or integer algorithm to the GPS locations in the respective segment.

In another aspect, the invention involves a method for managing a fleet of ridesharing vehicles. The method can involve receiving, by a computing device, Global Positioning System (GPS) data from the fleet of ridesharing vehicles. The method can also involve for each ridesharing vehicle in the fleet: i) determining, by a computing device, a plurality of GPS locations, wherein each GPS location includes an associated a time stamp; ii) splitting, by the computing device, the plurality of GPS locations into substantially unique segments, wherein each segment includes a number of GPS locations that is based on one or more predetermined factors; iii) for each segment, determining, by the computing device, a most probable location for each of the plurality of GPS locations to determine a partial route for each segment that the current rideshare vehicle rode on; and iv) determining, by the computing device, a complete route for the current rideshare by concatenating the partial routes for each segment based on the time stamp.

In some embodiments, each segment includes one or two GPS locations that overlaps with one or two segments that have a sequential time stamp that is after, before or both.

In some embodiments, the method also involves filtering the plurality of GPS locations if the distance between any of the plurality of GPS locations is below a predefined threshold. In some embodiments, the method also involves filtering the plurality of GPS locations if its corresponding speed is below a predefined threshold.

In some embodiments, the one or more predetermined factors are time duration, distance, desired computational time, or any combination thereof. In some embodiments, the splitting further comprises avoiding splitting at GPS locations where the corresponding speed is below a predefined threshold. In some embodiments, determining a most probable location for each of the plurality of GPS locations for each segment is performed for all segments in parallel.

In some embodiments, determining a most probable location for each of the plurality of GPS locations for each segment further comprises determining a confidence for each GPS location with its corresponding determined most probable location, and retaining the most probable location if the confidence is above a threshold, otherwise discarding the GPS location in the respective segment.

In some embodiments, determining the complete route further comprises determining if the end and start points of each sequential partial route match, and if not, returning to step ii) and splitting the segments at different locations then previously split.

In some embodiments, determining a partial route for each segment that the current rideshare vehicle rode on further comprises applying a Markovian algorithm, dynamic programming, Viterbi algorithm, Kalman filter, or integer algorithm to the GPS locations in the respective segment.

The foregoing general description and the following detailed description are exemplary and explanatory only and are not restrictive of the claims.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features and advantages thereof, can be understood by reference to the following detailed description when read with the accompanied drawings. Embodiments of the invention are illustrated by way of example and not limitation in the figures of the accompanying drawings, in which like reference numerals indicate corresponding, analogous or similar elements, and in which:
Fig. 1 is a diagram of a ridesharing management system, according to some embodiments of the invention.
Fig. 2 is a diagram of a mobile communications device associated with a ridesharing management system, according to some embodiments of the invention.
Fig. 3 is a diagram of an automated ridesharing dispatch system, including ridesharing management server associated with a ridesharing management system, according to some embodiments of the invention.
Fig. 4 is a flow diagram for a method of managing a fleet of ridesharing vehicles, according to some embodiments of the invention.

### DETAILED DESCRIPTION

In the following detailed description, numerous specific details are set forth in order to provide a thorough understanding of the invention. However, it will be understood by those skilled in the art that the present invention can be practiced without these specific details. In other instances, well-known methods, procedures, and components, modules, units and/or circuits have not been described in detail so as not to obscure the invention.

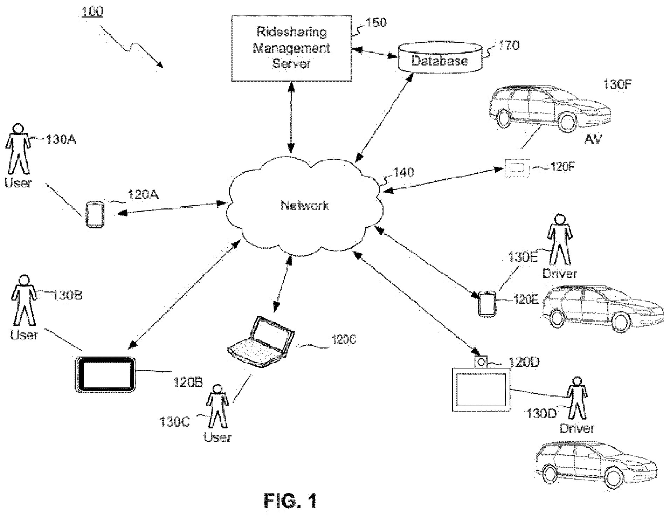

Fig. 1 is a diagram of a ridesharing management system 100, according to some embodiments of the invention. The ridesharing management system 100 includes one or more user devices 120A-120F (collectively referred to as user devices 120) associated with respective users 130A-130F, a network 140, a ridesharing management server 150, and a database 170. The user devices 120 can be mobile communications devices.

The users 130A-130F can be riders, drivers and/or other computing systems. In Fig. 1, users 130A-130C are riders, users 130D-130E are drivers, and user 130F is an autonomously driven vehicle user. The user devices 120A-120F can be associated with riders, drivers, and/or other computing systems, such that user devices 120A-120C can be referred to as rider devices, 120D-120E can be referred to as driver devices, and user device 120F can be referred to as a driving-control device.

The network 140 can be coupled to the user devices 120 to facilitate communications between the user devices 120 and the ridesharing management server 150. For example, the rider 130A can request a ride via the rider device 120A that is a smart phone. The request can be transmitted by the user device 120A to the ridesharing management server 150 through the network 140. The ridesharing management server 150 can transmit a route to the driver device 120E to instruct the driver 130E to pick-up the rider 130A. The ridesharing management server 150 can transmit a message to the rider 130A via the rider device 120A indicating that the driver 130E is on its way and the message can instruct the rider 130A to a particular pick-up location.

The network 140 can facilitate communications that include receiving ride requests and/or other ride related input from or sending confirmations to the rider devices 120A-120C and/or sending ride service assignments to the driver devices 120D-120E and driving-control device 120F.

The network 140 can be any type of network that provides communications, exchanges information, and/or facilitates the exchange of information between ridesharing management server 150 and user devices 120. For example, network 140 can be the Internet, a Local Area Network, a cellular network, a public switched telephone network ("PSTN"), and/or other suitable connection(s) that enables ridesharing management system 100 to send and/or receive information between the components of the ridesharing management system 100. The network 140 can be wired and/or wireless depending on the type of connection to the network 140. Although the network 140 is shown herein as a cloud, the network 140 can include a variety of computing components, including wired and wireless components that in various networked configurations to facilitate desired communication between components.

The network 140 can support a variety of messaging formats as is known in the art, and may support a variety of services and applications for user devices 120. For example, the network 140 can support navigation services for user devices 120, such as directing users and/or ridesharing service vehicles to pick-up and/or drop-off locations.

The ridesharing management server 150 can be a system that communicates with and/or is part of a communication service provider which provides a variety of data or services, such as voice, messaging, real-time audio/video, to users, such as users 130A-130E. The ridesharing management server 150 can be a computer-based system including computer system components, desktop computers, workstations, tablets, handheld mobile communications devices, memory devices, and/or internal network(s) connecting the components.

The ridesharing management server 150 can receive information from user devices 120 over the network 140, process the information, store the information, and/or transmit information to mobile communications devices 120 over network 140. The ridesharing management server 150 can receive ride requests from user devices 120A-120C. The ridesharing management server 150 can send ride confirmation and/or ride fare information to user devices 120A-120C. The ridesharing management server 150 can send ride service assignments (e.g., including pick-up and/or drop-off location information) to driver devices 120D and 120E, and driving-control device 120F.

The ridesharing management server 150 can receive user input from user devices 120A-120C. For example, the ridesharing management server 150 can receive various ride service parameters, such as walking distance to a pick-up location, maximum delay of arrival/detour, and/or maximum number of subsequent pick-ups.

The ridesharing management server 150 can receive user input from user devices 120D, 120E and 120F. For example, the ridesharing management server 150 can receive from each of the user devices GPS locations, a time stamp the GPS location was received by the user device, and/or a speed of the vehicle (e.g., in meters/second) at the time the GPS location was received by the respective user device.

The rideshare vehicle can be a car, van, SUV, truck, bus or any kind of vehicle suitable for human transportation. In some embodiments, a vehicle is a taxi. In some embodiments, a rideshare vehicle can be an autonomous vehicle, wherein a control device integrated with the vehicle or a management system separate from the vehicle can send operational messages.

The ridesharing management server 150 can calculate ride fares based on a solo portion of a user's ride and a shared portion of the ride. The ride fare calculation can be based on various ride service parameters set by the user, such as the walking distance involved in the ride, and/or user selection regarding toll road usage.

The database 170 may include one or more physical and/or virtual storages coupled with the ridesharing management server 150. The database 170 can store user account information (e.g., registered rider and/or driver accounts) and/or corresponding user profiles (e.g., contact information, profile photos, and/or associated mobile communications device information). User account information for a rider can include ride history, service feedback, complaints, and/or comments. User account information for a driver can include number of ride service assignments completed, ratings, and/or ride service history information. The database 170 can store various ride requests received from user devices 120A-120C. Each ride request can include a corresponding starting point and desired destination information, user input regarding various service parameters, pick-up and drop-off locations, time of pick-up and drop-off, ride fares, and/or other user feedback (e.g., user comments).

The database 170 may include traffic data, maps, and/or toll road information, which may be used for ridesharing service management. The traffic data may include historical traffic data and/or real-time traffic data regarding a certain geographical region. The traffic data may be used to determine traffic conditions. Traffic data and traffic conditions can be used to estimate pick-up and drop-off times for riders and/or determine an optimal route for a particular ride or for all rides. The real-time traffic data may be received from a real-time traffic monitoring system, which may be integrated into or independent from ridesharing management system 100. The database 170 may include GPS locations, time stamps, and/or speed of the vehicle received from one or more user devices.

The maps may include map information (e.g., roads, streets and/or distances) typically used for navigation purposes. The map information can be used to determine potential routes and in transit routes for the rideshare vehicles and/or guiding the users to a pick-off or drop-off location. Guiding the users to a pick-up or drop off location can include displaying a map, outputting audio, displaying a list of directions or any combination thereof. The in transit routes can be modified based on adding or reducing passengers, the driver driving off the route, speed and/or other updates. Toll road information may include amount of toll charges regarding certain roads, and any change or updates thereof. Toll road information may be used to calculate ride fares. In some embodiments, a rider can specify that the rideshare vehicle route avoids toll roads.

The data stored in database 170 can be transmitted to the ridesharing management server 150 for accommodating ride requests. In some embodiments, the database 170 is stored in a cloud-based server (not shown) that is accessible by the ridesharing management server 150 and/or user devices 120 through the network 140. In some embodiments, the database 170 reside within the ridesharing management server 150.

During operation, the ridesharing management server 150 can communicate with the driving-control device 120F to direct the autonomous vehicle 130F to pick up and drop off riders 130A-130C. In some embodiments, autonomous vehicles capable of detecting objects on the road and navigate to designated locations may be utilized for providing ridesharing services.

In various embodiments, the ridesharing management server 150 is implemented on a single server or on multiple servers. Each server can be on a single computing device or distributed among multiple computing devices. In various embodiments, the ridesharing management system 100 includes multiple ridesharing management servers, and each ridesharing management server can serve a category of ridesharing services, ridesharing services associated with a certain category of service vehicles, and/or ridesharing services in a specific geographical region. For example, a first ridesharing management server can direct a first fleet of vehicles, a second ridesharing management server can direct a second fleet of vehicles and a third ridesharing server can direct a third fleet of vehicles. The first, second and third fleet of vehicles can be on-demand services, fixed-route services, or any combination thereof.

In some embodiments, a plurality of ridesharing management servers collectively provides a dynamic and integrated ridesharing service system.

As shown in Fig. 1, users 130A-130E may include a plurality of users 130A-130C, and a plurality of drivers 130D and 130E, who may communicate with one another, and with ridesharing management server 150 using various types of user devices 120 that are mobile communications devices. For example, the mobile communications device can include a display such as a television, tablet, computer monitor, video conferencing console, or laptop computer screen. A mobile communications device 120 can further include video/audio input devices such as a microphone, video camera, keyboard and/or web camera. A mobile communications device 120 can include mobile devices such as a tablet or a smartphone having display and/or video/audio capture capabilities. The mobile communications device can include one or more software applications that can facilitate the mobile communications devices to engage in communications, such as IM, VoIP, video conferences. For example, user devices 130A-130C can send requests to ridesharing management server 150, and receive confirmations therefrom. Drivers 130D and 130E can use their respective user devices to receive ride service assignments and navigation information from ridesharing management server 150, and may contact the users with their respective user devices.

In some embodiments, a user may directly hail a vehicle by hand gesture or verbal communication, such as traditional street vehicle hailing. In such embodiments, once a driver accepts the request, the driver can use his respective user device to input the ride request information. Ridesharing management server 150 can receive the information, and accordingly assign one or more additional ride service assignments to the same vehicle, for example, subsequent ride requests received from other user devices 120 through network 140.

In some embodiments, driver devices 120D and 120E, and driving-control device 120F may be embodied in a vehicle control panel, as a part of the vehicle control system associated with a particular vehicle. For example, a traditional taxi company may install a drive device in all taxi vehicles managed by the taxi company. In some embodiments, driver devices 120D and 120E, and driving-control device 120F, may be further coupled with a payment device, such as a card reader installed as a part of the vehicle control panel or as a separate device associated with the vehicle. A user may then use the payment device as an alternative payment mechanism. For example, a user who hails the taxi on the street may pay through the payment device, without using a user device providing ridesharing service.

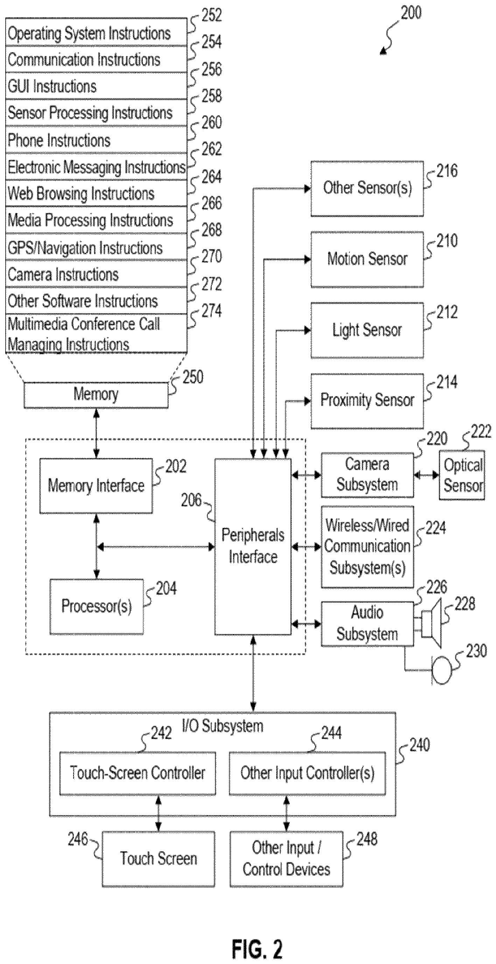

Fig. 2 is a diagram of a mobile communications device 200 (e.g., user device 120 100 as shown above in FIG. 1) associated with a ridesharing management system (e.g.. ridesharing management system 100 as shown above in FIG. 1), according to some embodiments of the invention. The mobile communications device 200 can be used to implement computer programs, applications, methods, processes, or other software to perform embodiments of the invention described in herein. For example, turning back to Fig. 1, rider devices 120A-120C, driver devices 120D and 120E, and driving-control device 120F may respectively be installed with a rider side ridesharing application, and a corresponding driver side ridesharing application.

Turning back to Fig. 2, the mobile communications device 200 can include a memory interface 202, one or more processors 204 such as data processors, image processors and/or central processing units, and/or a peripherals interface 206. The Memory interface 202, one or more processors 204, and/or peripherals interface 206 can be separate components or can be integrated in one or more integrated circuits. The various components in mobile communications device 200 may be coupled by one or more communication buses or signal lines.

Sensors, devices, and subsystems can be coupled to peripherals interface 206 to facilitate multiple functionalities. For example, a motion sensor 210, a light sensor 212, and a proximity sensor 214 may be coupled to peripherals interface 206 to facilitate orientation, lighting, and/or proximity functions. One or more sensors 216 can be connected to peripherals interface 206, such as a positioning system (e.g., GPS receiver), a temperature sensor, a biometric sensor, and/or other sensing devices. A GPS receiver can be integrated with, or connected to, mobile communications device 200. For example, a GPS receiver may be included in mobile telephones, such as smartphone devices. GPS software can allow mobile telephones to use an internal and/or external GPS receiver (e.g., connecting via a serial port or Bluetooth). A camera subsystem 220 and/or an optical sensor 222, e.g., a charged coupled device ("CCD") or a complementary metal-oxide semiconductor ("CMOS") optical sensor, can be used to facilitate camera functions, such as recording photographs and video clips.

Communication functions can be facilitated through one or more wireless/wired communication subsystems 224, which can include an Ethernet port, radio frequency receivers and transmitters and/or optical (e.g., infrared) receivers and/or transmitters. The specific design and implementation of wireless/wired communication subsystem 224 may depend on the communication network(s) over which mobile communications device 200 is intended to operate. For example, in some embodiments, mobile communications device 200 may include wireless/wired communication subsystems 224 designed to operate over a GSM network, a GPRS network, an EDGE network, a Wi-Fi or WiMax network, and a Bluetooth^{®} network.

An audio subsystem 226 may be coupled to a speaker 228 and a microphone 230 to facilitate voice-enabled functions, such as voice recognition, voice replication, digital recording, and/or telephony functions.

I/O subsystem 240 may include touch screen controller 242 and/or other input controller(s) 244. Touch screen controller 242 may be coupled to touch screen 246. Touch screen 246 and touch screen controller 242 may, for example, detect contact and movement or break thereof using any of a plurality of touch sensitivity technologies, including but not limited to capacitive, resistive, infrared, and surface acoustic wave technologies, as well as other proximity sensor arrays or other elements for determining one or more points of contact with touch screen 246. While touch screen 246 is shown in Fig. 2, I/O subsystem 240 may include a display screen (e.g., CRT or LCD) in place of touch screen 246.

Other input controller(s) 244 may be coupled to other input/control devices 248, such as one or more buttons, rocker switches, thumb-wheel, infrared port, USB port, and/or a pointer device such as a stylus. Touch screen 246 may, for example, also be used to implement virtual or soft buttons and/or a keyboard.

Memory interface 202 may be coupled to memory 250. Memory 250 includes high-speed random access memory and/or non-volatile memory, such as one or more magnetic disk storage devices, one or more optical storage devices, and/or flash memory (e.g., NAND, NOR). Memory 250 may store an operating system 252, such as DRAWIN, RTXC, LINUX, iOS, UNIX, OS X, WINDOWS, or an embedded operating system such as VXWorkS. Operating system 252 may include instructions for handling basic system services and for performing hardware dependent tasks. In some implementations, operating system 252 can be a kernel (e.g., UNIX kernel).

Memory 250 may also store communication instructions 254 to facilitate communicating with one or more additional devices, one or more computers and/or one or more servers. Memory 250 can include graphical user interface instructions 256 to facilitate graphic user interface processing; sensor processing instructions 258 to facilitate sensor-related processing and functions; phone instructions 260 to facilitate phone-related processes and functions; electronic messaging instructions 262 to facilitate electronic-messaging related processes and functions; web browsing instructions 264 to facilitate web browsing-related processes and functions; media processing instructions 266 to facilitate media processing-related processes and functions; GPS/navigation instructions 268 to facilitate GPS and navigation-related processes and instructions; camera instructions 270 to facilitate camera-related processes and functions; and/or other software instructions 272 to facilitate other processes and functions.

In some embodiments, communication instructions 254 may include software applications to facilitate connection with ridesharing management server (e.g., ridesharing management server 150 as described above in Fig. 1) that handles vehicle ridesharing requests. Graphical user interface instructions 256 may include a software program that facilitates a user associated with the mobile communications device to receive messages from ridesharing management server 150, provide user input, and so on. For example, a user may send ride requests and ride service parameters to a ridesharing management server and receive ridesharing proposals and confirmation messages. A driver may receive ride service assignments from ridesharing management server, and provide ride service status updates.

Each of the above identified instructions and applications may correspond to a set of instructions for performing one or more functions described above. These instructions need not be implemented as separate software programs, procedures, or modules. Memory 250 may include additional instructions or fewer instructions. Furthermore, various functions of mobile communications device 200 may be implemented in hardware and/or in software, including in one or more signal processing and/or application specific integrated circuits.

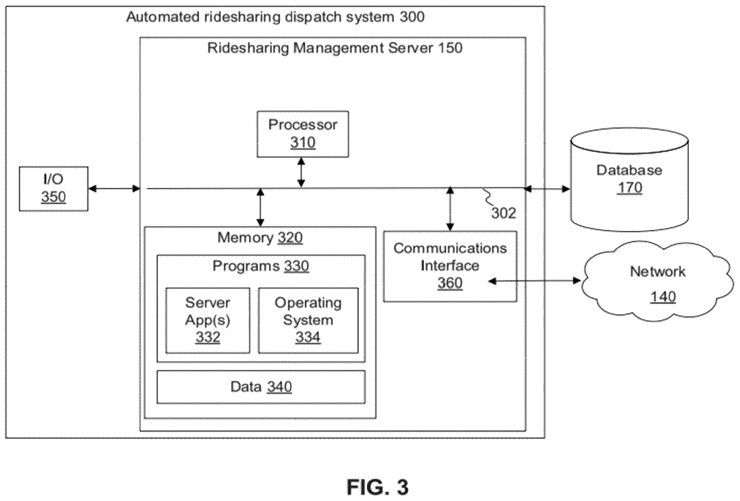

Fig. 3 is a diagram of an automated ridesharing dispatch system 300, including a ridesharing management server (e.g., ridesharing management server 150 as described above in Fig. 1) associated with a ridesharing management system (e.g., ridesharing management system 100 as described above in Fig. 1), according to some embodiments of the invention. The ridesharing management server 150 can include a bus 302 (or other communication mechanism), which interconnects subsystems and/or components for transferring information within the ridesharing management server 150.

As shown in Fig. 3, automated ridesharing dispatch system 300 may include one or more processors 310, one or more memories 320 storing programs 330 including, for example, server app(s) 332, operating system 334, and data 340, and a communications interface 360 (e.g., a modem, Ethernet card, or any other interface configured to exchange data with a network, such as network 140 in Fig. 1). Automated ridesharing dispatch system 300 can communicate with an external database (e.g., external databased 170 as described above with respect to Fig. 1). Automated ridesharing dispatch system 300 can include a single server (e.g., ridesharing management server 150) and/or can be configured as a distributed computer system including multiple servers, server farms, clouds, and/or computers that can interoperate to perform one or more of the processes and functionalities associated with embodiments.

The ridesharing management server 150 can be a computer platform that provides services via a network, such as the Internet, it can use virtual machines that may not correspond to individual hardware. The computational and/or storage capabilities can be implemented by allocating appropriate portions of desirable computation/storage power from a scalable repository, such as a data center and/or a distributed computing environment.

Processor 310 may be one or more processing devices configured to perform functions of the disclosed methods, such as a microprocessor manufactured by Intel^{™} or manufactured by AMD^{™}. Processor 310 can include a single core or multiple core processors executing parallel processes simultaneously. For example, processor 310 may be a single core processor with virtual processing technologies. In some embodiments, processor 310 can uses logical processors to simultaneously execute and/or control multiple processes. Processor 310 can implement virtual machine technologies, and/or other technologies to provide the ability to execute, control, run, manipulate, and/or store multiple software processes, applications, programs. In some embodiments, processor 310 includes a multiple-core processor arrangement (e.g., dual and/or quad core) to provide parallel processing functionalities to allow ridesharing management server 150 to execute multiple processes simultaneously. It is appreciated by one of ordinary skill in the art that other types of processor arrangements can be implemented that provide for the capabilities disclosed herein.

Memory 320 can be a volatile or non-volatile, magnetic, semiconductor, tape, optical, removable, non-removable, or other type of storage device or tangible or non-transitory computer-readable medium that stores one or more program(s) 330 such as server apps 332 and operating system 334, and data 340. Common forms of non-transitory media include, for example, a flash drive, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM or any other flash memory, NVRAM, a cache, a register, any other memory chip or cartridge, and networked versions of the same.

The ridesharing management server (e.g., ridesharing management server 150 as described above in Fig. 1) can include one or more storage devices configured to store information used by processor 310 (or other components) to perform certain functions related to the embodiments. For example, the ridesharing management server may include memory 320 that includes instructions to enable processor 310 to execute one or more applications, such as server apps 332, operating system 334, and/or any other type of application or software known to be available on computer systems. In some embodiments, the instructions, and/or application programs, can be stored in an external database 170 (which can also be internal to ridesharing management server 150) or external storage communicatively coupled with ridesharing management server 150 (not shown), such as one or more database or memory accessible over network 140.

Database 170 or other external storage may be a volatile or non-volatile, magnetic, semiconductor, tape, optical, removable, non-removable, or other type of storage device or tangible or non-transitory computer-readable medium. Memory 320 and database 170 may include one or more memory devices that store data and instructions used to perform one or more features of the disclosed embodiments. Memory 320 and database 170 may also include any combination of one or more databases controlled by memory controller devices (e.g., server(s), etc.) or software, such as document management systems, Microsoft SQL databases, SharePoint databases, Oracle^{™} databases, Sybase^{™} databases, or other relational databases.

In some embodiments, ridesharing management server 150 may be communicatively connected to one or more remote memory devices (e.g., remote databases (not shown)) through network 140 or a different network. The remote memory devices can be configured to store information that ridesharing management server 150 can access and/or manage. By way of example, the remote memory devices may include document management systems, Microsoft SQL database, SharePoint databases, Oracle^{™} databases, Sybase^{™} databases, or other relational databases. Systems and methods consistent with disclosed embodiments, however, are not limited to separate databases or even to the use of a database.

Programs 330 may include one or more software modules causing processor 310 to perform one or more functions of the disclosed embodiments. Moreover, processor 310 may execute one or more programs located remotely from one or more components of the ridesharing management system 100. For example, ridesharing management server 150 may access one or more remote programs that, when executed, perform functions related to disclosed embodiments.

In the presently described embodiment, server app(s) 332 may cause processor 310 to perform one or more functions of the disclosed methods. For example, devices associated with users, drivers and autonomous vehicles may respectively be installed with user applications for vehicle ridesharing services, and driver applications for vehicle ridesharing services. Further, a mobile communications device may be installed with both the driver applications and the user applications, for uses in corresponding situations.

In some embodiments, other components of ridesharing management system 100 may be configured to perform one or more functions of the disclosed methods. For example, mobile communications devices 120 may be configured to calculate estimate pick-up and drop-off times based on a certain ride request, and may be configured to calculate estimate ride fares. As another example, mobile communications devices 120 may further be configured to provide navigation service, and location service, such as directing the user to a particular pick-up or drop-off location, and providing information about a current location of the respective user or vehicle to ridesharing management server 150.

In some embodiments, program(s) 330 may include operating system 334 performing operating system functions when executed by one or more processors such as processor 310. By way of example, operating system 334 may include Microsoft Windows^{™}, Unix^{™}, Linux^{™}, Apple^{™} operating systems, Personal Digital Assistant (PDA) type operating systems, such as Apple iOS, Google Android, Blackberry OS, Microsoft CE^{™}, or other types of operating systems. Accordingly, the disclosed embodiments may operate and function with computer systems running any type of operating system 334. Ridesharing management server 150 may also include software that, when executed by a processor, provides communications with network 140 through communications interface 360 and/or a direct connection to one or more mobile communications devices 120. Specifically, communications interface 360 may be configured to receive ride requests (e.g., from user devices 120A -120C) headed to differing destinations, and receive indications of the current locations of the ridesharing vehicles (e.g., from driver devices 120D and 120E or driving-control device 120F). In one example, communications interface 360 may be configured to continuously or periodically receive current vehicle location data for the plurality of ridesharing vehicles that are part of ridesharing management system 100. The plurality of ridesharing vehicles can be a car fleet, bus fleet or any combination thereof. The current vehicle location data may include global positioning system (GPS) data generated by at least one GPS component of a mobile communications device 120 associated with each ridesharing vehicle.

In some embodiments, data 340 may include, for example, profiles of users, such as user profiles or driver profiles. User profiles can include contact information, profile photos, user account information and/or associated mobile communications device information. Rider account information can include ride history, service feedbacks, complaints, and/or comments. Driver account information can include number of ride service assignments completed, ratings, ride service history, rider ride history, driver service record, and/or communications between a driver and a rider regarding a particular ride request. In some embodiments, data 340 may further include traffic data, toll road information, and navigation information, which may be used for handling and accommodating ride requests.

Automated ridesharing dispatch system 300 may also include one or more I/O devices 350 having one or more interfaces for receiving signals or input from devices and providing signals or output to one or more devices that allow data to be received and/or transmitted by automated ridesharing dispatch system 300. For example, automated ridesharing dispatch system 300 may include interface components for interfacing with one or more input devices, such as one or more keyboards, mouse devices, and the like, that enable automated ridesharing dispatch system 300 to receive input from an operator or administrator (not shown).

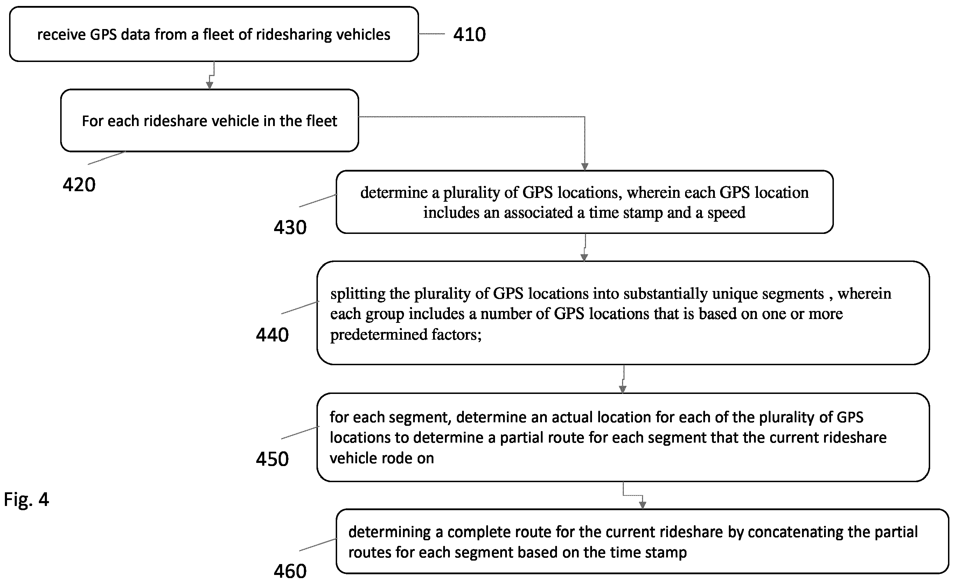

Fig. 4 is a flowchart for a method for managing (e.g., via a rideshare management server 150 over a network 140, as described above in FIG. 1) a fleet of ridesharing vehicles (e.g., users in fleet 130D, 130E, and 130F, as described above in FIG. 1), according to some embodiments of the invention.

The method involves receiving (e.g., via the communications interface 360 as described above with respect to Fig. 3) GPS data from the fleet of ridesharing vehicles (Step 410). The GPS data can be GPS data from each respective ridesharing vehicle. In various embodiments, the ridesharing management server can determine any subset of the vehicles in the fleet to receive GPS data from.

For example, table 1 shown below is an example of GPS location (e.g., GPS sample) data as received from a vehicle in the fleet:

**Table 1**

| Sample: | Latitude; Longitude |
|---|---|
| GPS Sample 1: | 48.7624893; 9.1533838 |
| GPS Sample 2: | 48.7624935; 9.1534642 |
| GPS Sample 3: | 48.7624735; 9.1537164 |
| GPS Sample 4: | 48.7624588; 9.1539185 |
| GPS Sample 5: | 48.7624527; 9.1541108 |
| GPS Sample 6: | 48.7624534; 9.1541361 |
| GPS Sample 7: | 48.7624576; 9.1542822 |
| GPS Sample 8: | 48.7624625; 9.1544145 |
| GPS Sample 9: | 48.7624796; 9.1545664 |
| GPS Sample 10: | 48.762501; 9.1546782 |

The method also involves for each ridesharing vehicle in the fleet (Step 420): i) determine (e.g., via the rideshare management server 150 as described above in Fig. 1) a plurality of GPS locations, wherein each GPS location includes an associated a time stamp and a speed (Step 430).

The GPS data can include latitudinal and longitudinal coordinates. The GPS data can be in the WGS84 format. In some parts of the world (e.g., Japan) the GPS signal can be in other coordinates and converted to the WGS84 format.

Each GPS latitudinal and longitudinal coordinate can include a time stamp and//or corresponding speed of the vehicle. In some embodiments, the speed is received from each of the vehicles. In some embodiments, the speed is determined based on the GPS locations.

In some embodiments, any of the plurality of GPS locations having a distance between them that is below a predefined threshold (e.g., under 2 meters) are filtered. The predefined threshold can be input by a user.

In some embodiments, each GPS location having a corresponding speed that is below a threshold (e.g., under 2 meters/second) can be filtered out of the data set. The predefined threshold can be input by a user. GPS locations with a corresponding speed below the predefined threshold can be erroneous.

The method also involves splitting the plurality of GPS locations into substantially unique segments, wherein each segment includes a number of GPS locations that is based on one or more predetermined factors (Step 440).

In some embodiments, the predetermined factor is time duration. Each segment can include standing time (e.g., time that the vehicle was not moving) and driving time (e.g., time that the vehicle was moving). The time duration can be set such that the segments have a driving time between 20 and 40 minutes. For example, for a vehicle that had a 12 hour trip with 5 hours of driving time, there can be 10 segments each being 30 minutes in length.

In some embodiments, the predetermined factor is distance. The distance can be set such that the segments are limited to be between 10 and 20 kilometers of driving time. For example, assume a vehicle that had 200 kilometers of driving time, there can be 10 segments.

In some embodiments, the predetermined factor is desired computational time. The computational time can be based on a desired duration for the computation to complete. For example, it may be desirable for a real-time answer. In some embodiments, an answer the next day before the fleet works again can be acceptable.

Continuing with the example shown above in Table 1, splitting the plurality of GPS locations in Table into substantially unique segments, can be determined as shown below in Table 2.

### Segments:

**Table 2**

| Segment 0: | | |
|---|---|---|
| | GPS Sample 1: | 48.7624893; 9.1533838 |
| | GPS Sample 2: | 48.7624935; 9.1534642 |
| | GPS Sample 3: | 48.7624735; 9.1537164 |
| | GPS Sample 4: | 48.7624588 9.1539185 |
| | GPS Sample 5: | 48.7624527; 9.1541108 |

| Segment 1: | | |
|---|---|---|
| | GPS Sample 4: | 48.7624588 9.1539185 |
| | GPS Sample 5: | 48.7624527 9.1541108 |
| | GPS Sample 6: | 48.7624534 9.1541361 |
| | GPS Sample 7: | 48.7624576 9.1542822 |
| | GPS Sample 8: | 48.7624625 9.1544145 |

| Segment 2: | | |
|---|---|---|
| | GPS Sample 7: | 48.7624576 9.1542822 |
| | GPS Sample 8: | 48.7624625 9.1544145 |
| | GPS Sample 9: | 48.7624796 9.1545664 |
| | GPS Sample 10: | 48.762501 9.1546782 |

In various embodiments, if there are more segments then computational resources, as many segments as possible are processed in parallel, and then the next batch of segments are processed in parallel, and so forth until all segments are processed.

It can be desirable to split the vehicle's GPS locations into multiple segments such that processing can occur on the segments in parallel.

In some embodiments, the splitting can involve avoiding splitting at GPS locations where the corresponding speed is below a threshold (e.g., 2 meters per second).

The method also involves for each segment, determining (e.g., by the ridesharing management server 150 as described above in FIG. 1) a most probable location for each of the plurality of GPS locations to determine a partial route for each segment that the current rideshare vehicle rode on (Step 450).

The plurality GPS locations can be noisy and/or inaccurate. One or more of the plurality of GPS locations may not be the actual route that the respective vehicle rode along. For example, in areas with many tall buildings GPS signal can be reflected off of the tall buildings, sometimes leading to the location (e.g., actual latitude and longitude) being listed as if it is inside of a building, and not on the actual road that the vehicle is on. In another example, it may appear as if the vehicle is turning right, but then the next GPS location shows that the vehicle went straight.

The most probable location can be determined via a Markov algorithm. In various embodiments, the most probable location is determined via dynamic programming, Viterbi algorithm, Kalman filter, and/or integer programming.

For example, continuing with the example above in Table 2, Table 3 shows an example of a Hidden Markov model applied to the segments of Table 2:

**Table 3**

| Matched segment 1: | |
|---|---|
| Matched Sample 1: | 48.762579232033545 9.1533838 |
| Matched Sample 2: | 48.762583432033544 9.1534642 |
| Matched Sample 3: | 48.762563432033545 9.1537164 |
| Matched Sample 4: | 48.762548732033544 9.1539185 |
| Matched Sample 5: | 48.762542632033544 9.1541108 |

| Matched segment 2: | |
|---|---|
| Matched Sample 4: | 48.762548732033544 9.1539185 |
| Matched Sample 5: | 48.762542632033544 9.1541108 |
| Matched Sample 6: | 48.762543332033545 9.1541361 |
| Matched Sample 7: | 48.762547532033544 9.1542822 |
| Matched Sample 8: | 48.762552432033544 9.1544145 |

| Matched segment 3: | |
|---|---|
| Matched Sample 7: | 48.762547532033544 9.1542822 |
| Matched Sample 8: | 48.762552432033544 9.1544145 |
| Matched Sample 9: | 48.762569532033545 9.1545664 |
| Matched Sample 10: | 48.76259093203355 9.1546782 |

The Markov algorithm can take as input a distance and duration matrix that can describe for each two GPS locations in the plurality of the GPS locations a distance and a duration. The Markov algorithm can also take as input a map of the roads, such that a distance between the of GPS locations and a nearby road can be determined, and/or additional information with respect to the roads can be determined. For example, if the distance between the of GPS locations and a nearby road is large, the particular GPS location can be determined as inaccurate and discarded.

In some embodiments, the map of the road can indicate that a particular GPS location cannot be accurate because it indicates a right turn, and the next few GPS locations indicate that the vehicle remained straight on the road. In these embodiments, the GPS locations identified as being inaccurate can be discarded.

In some embodiments, a speed between two GPS locations can be determined. If the speed is above a feasible threshold (e.g., 100 miles/hour), the GPS locations can discarded.

In some embodiments, the Markovian algorithm takes as inputs locations the vehicle has confirmation of having had visited (e.g., if a driver indicated that they picked up a user a particular location). For example, GPS locations that are confirmed as having been visited can skip the evaluation in the Markovian algorithm and be set in the route as being the location.

Determining a most probable location for each of the plurality of GPS locations for each segment can be performed for each segment in parallel. For example, for embodiments using a Markov algorithm, each segment can be processed using the Markov algorithm at the same time (or substantially the same time), such that the segments are processed in parallel to, for example, reduce the overall processing time. In embodiments with large fleets (e.g., 10,000 vehicles), it may take days to process the GPS locations without performing the segmenting.

In some embodiments, each segment includes one or two GPS locations that overlaps with one or two segments that have a sequential time stamp that is after, before or both. For example, assume: a travel duration of 3 hours and 45 minutes. The segments can be constructed so that segment 1 occurs at time 0 to 1:40, segment 2 occurs at time 1:39 to time 2:41, and segment 3 occurs at time 2:40 to time 3:45. In this manner the segments can be overlapping.

In some embodiments, a confidence for each actual GPS location can be determined. The confidence can be determined by comparing each of the plurality of GPS locations received from the vehicle (e.g., the GPS data received at the vehicle by a GPS receiver) with its corresponding determined most probable location. The confidence can be determined by a expectation maximum method. The confidence can be compared to a predetermined threshold for each segment. If the most probable location is above the predetermined threshold, then the most probable location can be kept in the segment, otherwise, the GPS location as received can be discarded. The predetermined threshold can be based on least probable options for the GPS locations for the particular segment. The confidence can go higher as the GPS locations has less probable alternatives.

The method also involves determining (e.g., by the ridesharing management server 150 as described above in FIG. 1) a complete route for the current rideshare by concatenating the partial routes for each segment based on the time stamp (Step 460).

In some embodiments, the concatenation is based on the prior splitting. For example, the order of the segments can be kept track of during splitting and they can be put back together in the saved order.

The concatenation can involve finding each start and stop time for each segment that matches. For example, assume segment 1 occurs at time 0 to 1:15, segment 2 occurs at time 1:18 to 2:15, and segment 3 occurs at 2:14 to 3:15. A determination to concatenate segment 1 with segment 2 can be made as 1:18 follows 1:15 in time. A determination as to whether the most probable location vehicle at 1:18 is possible based on the most probable location of the vehicle at 1:15 and the speed of the vehicle at 1:15 can be made. For example, it can be possible that the most probable location of the vehicle at 1:18 is 5 miles from the location of the vehicle at 1:15 and thus, impossible for the vehicle's route to be from the end of segment 1 to the beginning of segment 2. Segments can be matched for feasibility based on location and/or direction.

For example, continuing with the example above in Table 3, Table 4 shows an example of determining a complete route of the segments shown in Table 3:

**Table 4**

| Reconstructed Route: | |
|---|---|
| Matched Sample 1: | 48.762579232033545 9.1533838 |
| Matched Sample 2: | 48.762583432033544 9.1534642 |
| Matched Sample 3: | 48.762563432033545 9.1537164 |
| Matched Sample 4: | 48.762548732033544 9.1539185 |
| Matched Sample 5: | 48.762542632033544 9.1541108 |
| Matched Sample 6: | 48.762543332033545 9.1541361 |
| Matched Sample 7: | 48.762547532033544 9.1542822 |
| Matched Sample 8: | 48.762552432033544 9.1544145 |
| Matched Sample 9: | 48.762569532033545 9.1545664 |
| Matched Sample 10: | 48.76259093203355 9.1546782 |

In some embodiments, where a match between segments cannot be made, the process can go back to the splitting the segments at different locations other than the locations that they were previously split. In some embodiments, splitting the segments at different locations includes creating more segments then were previously created. In some embodiments, splitting the segments at different locations includes creating less segments then were previously created. For example, as segment can be united with a segment before it in time and after it. This can be considered a larger segment.

In some embodiments, the complete route is transmitted to a display (e.g., a computer or smart phone display of an operator of the rideshare management system, to a computer or smart phone display of a rider and/or driver).

One skilled in the art will realize the invention can be embodied in other specific forms without departing from the spirit or essential characteristics thereof. The foregoing embodiments are therefore to be considered in all respects illustrative rather than limiting of the invention described herein. Scope of the invention is thus indicated by the appended claims, rather than by the foregoing description, and all changes that come within the meaning and range of equivalency of the claims are therefore intended to be embraced therein.

In the foregoing detailed description, numerous specific details are set forth in order to provide an understanding of the invention. However, it will be understood by those skilled in the art that the invention can be practiced without these specific details. In other instances, well-known methods, procedures, and components, modules, units and/or circuits have not been described in detail so as not to obscure the invention. Some features or elements described with respect to one embodiment can be combined with features or elements described with respect to other embodiments.

Although embodiments of the invention are not limited in this regard, discussions utilizing terms such as, for example, "processing," "computing," "calculating," "determining," "establishing", "analyzing", "checking", or the like, can refer to operation(s) and/or process(es) of a computer, a computing platform, a computing system, or other electronic computing device, that manipulates and/or transforms data represented as physical (e.g., electronic) quantities within the computer's registers and/or memories into other data similarly represented as physical quantities within the computer's registers and/or memories or other information non-transitory storage medium that can store instructions to perform operations and/or processes.

Although embodiments of the invention are not limited in this regard, the terms "plurality" and "a plurality" as used herein can include, for example, "multiple" or "two or more". The terms "plurality" or "a plurality" can be used throughout the specification to describe two or more components, devices, elements, units, parameters, or the like. The term set when used herein can include one or more items. Unless explicitly stated, the method embodiments described herein are not constrained to a particular order or sequence. Some of the described method embodiments or elements thereof can occur or be performed simultaneously, at the same point in time, or concurrently.

A computer program can be written in any form of programming language, including compiled and/or interpreted languages, and the computer program can be deployed in any form, including as a stand-alone program or as a subroutine, element, and/or other unit suitable for use in a computing environment. A computer program can be deployed to be executed on one computer or on multiple computers at one site.

Method steps can be performed by one or more programmable processors executing a computer program to perform functions of the invention by operating on input data and generating output. Method steps can also be performed by an apparatus and can be implemented as special purpose logic circuitry. The circuitry can, for example, be a FPGA (field programmable gate array) and/or an ASIC (application-specific integrated circuit). Modules, subroutines, and software agents can refer to portions of the computer program, the processor, the special circuitry, software, and/or hardware that implement that functionality.

Processors suitable for the execution of a computer program include, by way of example, both general and special purpose microprocessors, and any one or more processors of any kind of digital computer. Generally, a processor receives instructions and data from a read-only memory or a random access memory or both. The essential elements of a computer are a processor for executing instructions and one or more memory devices for storing instructions and data. Generally, a computer can be operatively coupled to receive data from and/or transfer data to one or more mass storage devices for storing data (e.g., magnetic, magneto-optical disks, or optical disks).

Data transmission and instructions can also occur over a communications network. Information carriers suitable for embodying computer program instructions and data include all forms of non-volatile memory, including by way of example semiconductor memory devices. The information carriers can, for example, be EPROM, EEPROM, flash memory devices, magnetic disks, internal hard disks, removable disks, magneto-optical disks, CD-ROM, and/or DVD-ROM disks. The processor and the memory can be supplemented by, and/or incorporated in special purpose logic circuitry.

To provide for interaction with a user, the above-described techniques can be implemented on a computer having a display device, a transmitting device, and/or a computing device. The display device can be, for example, a cathode ray tube (CRT) and/or a liquid crystal display (LCD) monitor. The interaction with a user can be, for example, a display of information to the user and a keyboard and a pointing device (e.g., a mouse or a trackball) by which the user can provide input to the computer (e.g., interact with a user interface element). Other kinds of devices can be used to provide for interaction with a user. Other devices can be, for example, feedback provided to the user in any form of sensory feedback (e.g., visual feedback, auditory feedback, or tactile feedback). Input from the user can be, for example, received in any form, including acoustic, speech, and/or tactile input.

The computing device can include, for example, a computer, a computer with a browser device, a telephone, an IP phone, a mobile device (e.g., cellular phone, personal digital assistant (PDA) device, laptop computer, electronic mail device), and/or other communication devices. The computing device can be, for example, one or more computer servers. The computer servers can be, for example, part of a server farm. The browser device includes, for example, a computer (e.g., desktop computer, laptop computer, and tablet) with a World Wide Web browser (e.g., Microsoft^{®} Internet Explorer^{®} available from Microsoft Corporation, Chrome available from Google, Mozilla^{®} Firefox available from Mozilla Corporation, Safari available from Apple). The mobile computing device includes, for example, a personal digital assistant (PDA).

Website and/or web pages can be provided, for example, through a network (e.g., Internet) using a web server. The web server can be, for example, a computer with a server module (e.g., Microsoft^{®} Internet Information Services available from Microsoft Corporation, Apache Web Server available from Apache Software Foundation, Apache Tomcat Web Server available from Apache Software Foundation).

The storage module can be, for example, a random access memory (RAM) module, a read only memory (ROM) module, a computer hard drive, a memory card (e.g., universal serial bus (USB) flash drive, a secure digital (SD) flash card), a floppy disk, and/or any other data storage device. Information stored on a storage module can be maintained, for example, in a database (e.g., relational database system, flat database system) and/or any other logical information storage mechanism.

The above-described techniques can be implemented in a distributed computing system that includes a back-end component. The back-end component can, for example, be a data server, a middleware component, and/or an application server. The above described techniques can be implemented in a distributing computing system that includes a front-end component. The front-end component can, for example, be a client computer having a graphical user interface, a Web browser through which a user can interact with an example implementation, and/or other graphical user interfaces for a transmitting device. The components of the system can be interconnected by any form or medium of digital data communication (e.g., a communication network). Examples of communication networks include a local area network (LAN), a wide area network (WAN), the Internet, wired networks, and/or wireless networks.

The system can include clients and servers. A client and a server are generally remote from each other and typically interact through a communication network. The relationship of client and server arises by virtue of computer programs running on the respective computers and having a client-server relationship to each other.

The above described networks can be implemented in a packet-based network, a circuit-based network, and/or a combination of a packet-based network and a circuit-based network. Packet-based networks can include, for example, the Internet, a carrier internet protocol (IP) network (e.g., local area network (LAN), wide area network (WAN), campus area network (CAN), metropolitan area network (MAN), home area network (HAN), a private IP network, an IP private branch exchange (IPBX), a wireless network (e.g., radio access network (RAN), 802.11 network, 802.16 network, general packet radio service (GPRS) network, HiperLAN), and/or other packet-based networks. Circuit-based networks can include, for example, the public switched telephone network (PSTN), a private branch exchange (PBX), a wireless network (e.g., RAN, Bluetooth^{®}, code-division multiple access (CDMA) network, time division multiple access (TDMA) network, global system for mobile communications (GSM) network), and/or other circuit-based networks.

Some embodiments of the present invention may be embodied in the form of a system, a method or a computer program product. Similarly, some embodiments may be embodied as hardware, software or a combination of both. Some embodiments may be embodied as a computer program product saved on one or more non-transitory computer readable medium (or media) in the form of computer readable program code embodied thereon. Such non-transitory computer readable medium may include instructions that when executed cause a processor to execute method steps in accordance with embodiments. In some embodiments the instructions stores on the computer readable medium may be in the form of an installed application and in the form of an installation package.

Such instructions may be, for example, loaded by one or more processors and get executed. For example, the computer readable medium may be a non-transitory computer readable storage medium. A non-transitory computer readable storage medium may be, for example, an electronic, optical, magnetic, electromagnetic, infrared, or semiconductor system, apparatus, or device, or any combination thereof.

Computer program code may be written in any suitable programming language. The program code may execute on a single computer system, or on a plurality of computer systems.

One skilled in the art will realize the invention may be embodied in other specific forms without departing from the spirit or essential characteristics thereof. The foregoing embodiments are therefore to be considered in all respects illustrative rather than limiting of the invention described herein. Scope of the invention is thus indicated by the appended claims, rather than by the foregoing description, and all changes that come within the meaning and range of equivalency of the claims are therefore intended to be embraced therein.

In the foregoing detailed description, numerous specific details are set forth in order to provide an understanding of the invention. However, it will be understood by those skilled in the art that the invention can be practiced without these specific details. In other instances, well-known methods, procedures, and components, modules, units and/or circuits have not been described in detail so as not to obscure the invention. Some features or elements described with respect to one embodiment can be combined with features or elements described with respect to other embodiments.

## Claims

1. A system for managing a fleet of ridesharing vehicles, the system comprising:
a communications interface configured to receive Global Positioning System (GPS) data from the fleet of ridesharing vehicles;
at least one processor configured to:
for each ridesharing vehicle in the fleet:
i) determine a plurality of GPS locations, wherein each GPS location includes an associated a time stamp;
ii) split the plurality of GPS locations into substantially unique segments, wherein each segment includes a number of GPS locations that is based on one or more predetermined factors;
iii) for each segment, determine a most probable location for each of the plurality of GPS locations to determine a partial route for each segment that the current rideshare vehicle rode on; and
iv) determine a complete route for the current rideshare by concatenating the partial routes for each segment based on the time stamp.

2. The system of claim 1 wherein each segment includes one or two GPS locations that overlaps with one or two segments that have a sequential time stamp that is after, before or both.

3. The system of claim 1 further comprising filtering the plurality of GPS locations if the distance between any of the plurality of GPS locations is below a predefined threshold.

4. The system of claim 1 further comprising filtering the plurality of GPS locations if its corresponding speed is below a predefined threshold.

5. The system of claim 1 wherein the one or more predetermined factors are time duration, distance, desired computational time, or any combination thereof.

6. The system of claim 1 wherein the splitting further comprises avoiding splitting at GPS locations where the corresponding speed is below a predefined threshold.

7. The system of claim 1 wherein determining a most probable location for each of the plurality of GPS locations for each segment is performed for all segments in parallel.

8. The system of claim 1 wherein determining a most probable location for each of the plurality of GPS locations for each segment further comprises determining a confidence for each GPS location with its corresponding determined most probable location, and retaining the most probable location if the confidence is above a threshold, otherwise discarding the GPS location in the respective segment.

9. The system of claim 1 wherein determining the complete route further comprises determining if the end and start points of each sequential partial route match, and if not, returning to step ii) and splitting the segments at different locations then previously split.

10. The system of claim 1 wherein determining a partial route for each segment that the current rideshare vehicle rode on further comprises applying a Markovian algorithm, dynamic programming, Viterbi algorithm, Kalman filter, or integer algorithm to the GPS locations in the respective segment.

11. A method for managing a fleet of ridesharing vehicles, the method comprising:
receiving, by a computing device, Global Positioning System (GPS) data from the fleet of ridesharing vehicles;
for each ridesharing vehicle in the fleet:
i) determining, by a computing device, a plurality of GPS locations, wherein each GPS location includes an associated a time stamp;
ii) splitting, by the computing device, the plurality of GPS locations into substantially unique segments, wherein each segment includes a number of GPS locations that is based on one or more predetermined factors;
iii) for each segment, determining, by the computing device, a most probable location for each of the plurality of GPS locations to determine a partial route for each segment that the current rideshare vehicle rode on; and
iv) determining, by the computing device, a complete route for the current rideshare by concatenating the partial routes for each segment based on the time stamp.

12. The method of claim 11 wherein each segment includes one or two GPS locations that overlaps with one or two segments that have a sequential time stamp that is after, before or both.

13. The method of claim 11 further comprising filtering the plurality of GPS locations if the distance between any of the plurality of GPS locations is below a predefined threshold.

14. The method of claim 11 further comprising filtering the plurality of GPS locations if its corresponding speed is below a predefined threshold.

15. The method of claim 11 wherein the one or more predetermined factors are time duration, distance, desired computational time, or any combination thereof.

16. The method of claim 11 wherein the splitting further comprises avoiding splitting at GPS locations where the corresponding speed is below a predefined threshold.

17. The method of claim 11 wherein determining a most probable location for each of the plurality of GPS locations for each segment is performed for all segments in parallel.

18. The method of claim 11 wherein determining a most probable location for each of the plurality of GPS locations for each segment further comprises determining a confidence for each GPS location with its corresponding determined most probable location, and retaining the most probable location if the confidence is above a threshold, otherwise discarding the GPS location in the respective segment.

19. The method of claim 11 wherein determining the complete route further comprises determining if the end and start points of each sequential partial route match, and if not, returning to step ii) and splitting the segments at different locations then previously split.

20. The method of claim 11 wherein determining a partial route for each segment that the current rideshare vehicle rode on further comprises applying a Markovian algorithm, dynamic programming, Viterbi algorithm, Kalman filter, or integer algorithm to the GPS locations in the respective segment.
